# EUROPEAN PATENT APPLICATION

(11) **EP 1 341 333 A2**
(43) Date of publication of application: **03.09.2003**
(21) Application number: 02023153.6
(22) Date of filing: 15.10.2002
(51) Int. Cl.: H04J 14/02

(54) **Multiple modulated wavelengths in a compact laser**

(30) Priority: 01.03.2002 US 87436
(71) Applicant: Agilent Technologies, Inc., Palo Alto, CA 94306 (US)
(72) Inventor: Helbing, Rene P., Palo Alto, CA 94303 (US); Trutna, William R., Jr., Atherton, CA 94027 (US)
(74) Representative: Liesegang, Eva

(57) **Abstract**

A multiple wavelength output light source (110) is disclosed. The multiple wavelength output light source (110) comprises a laser device (210) having a plurality of output wavelengths (λ₁-λ₄), and a modulator (232, 234, 236, 238) associated with and configured to modulate each wavelength (λ₁-λ₄) independently. The plurality of modulated wavelengths (λ₁-λ₄) can be separated (218) prior to modulating and then combined (252), after modulation, onto a single optical fiber (104). The multiple modulated laser outputs can be used in a WDM or a DWDM optical communication system.

## Description

### TECHNICAL FIELD

The present invention relates generally to optical fiber communication, and, more particularly, to a compact laser source having multiple modulated wavelengths.

### BACKGROUND OF THE INVENTION

Optical communication systems have been in existence for some time and continue to increase in use due to the potentially large amount of bandwidth available for transporting signals. Optical communication systems provide high bandwidth and superior speed and are suitable for efficiently communicating large amounts of voice and data over long distances. Advances in optical communications systems now allow optical fibers to carry large amounts of information by carrying optical signals at multiple frequencies. Such optical communications employ what is referred to as wave division multiplexing (WDM) to multiplex many optical signals onto a single optical fiber. Such multiplexing is accomplished by using many frequencies available in the optical communication spectrum and modulating the individual frequencies so that each frequency carries a different optical signal. The multiple signals can be spectrally separated on the optical fiber by approximately several dozens of nanometers (nm) (in the case of coarse WDM (CWDM)) or by just a fraction of a nm (in the case of dense WDM (DWDM)). In this manner, the optical signals remain discrete.

When using CWDM or DWDM to multiplex many optical signals onto a single optical fiber, a laser source is required for each optical signal because each optical signal is transmitted at a particular frequency. Further, because an individual laser is required for each optical signal, many lasers must be fabricated and integrated into modules. In addition, each laser must be aligned with an optical fiber or a waveguide. Typically, a distributed feedback laser (DFB laser) is associated with each optical wavelength and is used as a discrete light source for each optical signal. The output of a DFB laser is highly focused at a particular wavelength and provides a relatively narrowband discrete output at a particular frequency. Unfortunately, a DFB laser is relatively costly and the large number of DFB lasers required in WDM systems makes them difficult to integrate into a compact laser source.

Alternatively, another type of laser, known as a Fabry-Perot (FP) laser, is generally less expensive than a DFB laser. However, the light output of an FP laser does not occur at or near a single frequency, and hence, occurs at many peaks along the usable optical spectrum. The spectral spacing of these output peaks prevents the use of an FP laser in a DWDM optical communication system.

Therefore, there is a need in the industry for a compact, low cost optical source that is capable of providing multiple modulated wavelengths in a CWDM or DWDM optical communication system.

### SUMMARY OF THE INVENTION

The invention is a multiple wavelength output light source, comprising a laser device having a plurality of output wavelengths, and a modulator associated with and configured to modulate each wavelength independently.

The plurality of modulated wavelengths can be separated prior to modulating and then combined onto a single optical fiber. The invention allows the spectral output peaks of a single inexpensive laser to be used in a WDM optical communication system to provide a plurality of modulated wavelengths. The multiple wavelength output light source can be a Fabry-Perot (FP) laser in which the spectral peaks are divided and separately modulated, thus enabling a single laser device to provide multiple modulated wavelength signals. Each of the spectral peaks of the laser device may be filtered by an optical filter, thus modifying each wavelength output to a predetermined profile. The FP laser provides a compact, multiple wavelength, light source in a WDM optical communication system. Further, the laser device, the plurality of modulators and the combining device can be economically fabricated on one substrate and comprise one module.

Related methods of operation are also provided. Other systems, methods, features, and advantages of the invention will be or become apparent to one with skill in the art upon examination of the following figures and detailed description. It is intended that all such additional systems, methods, features, and advantages be included within this description, be within the scope of the invention, and be protected by the accompanying claims.

### BRIEF DESCRIPTION OF THE DRAWINGS

The invention, as defined in the claims, can be better understood with reference to the following drawings. The components within the drawings are not necessarily to scale relative to each other, emphasis instead being placed upon clearly illustrating the principles of the present invention.
FIG. 1 is a block diagram illustrating an exemplar communication system 100 in which the invention resides.
FIG. 2A is a graphical illustration showing an output spectrum of a distributed feedback (DFB) laser.
FIG. 2B is a graphical illustration showing an output spectrum of a FP laser.
FIG. 3 is a block diagram illustrating the light source of FIG. 1.
FIG. 4A is a graphical illustration showing the profile of the optical filter of FIG. 3.
FIG. 4B is a graphical illustration showing the output of the FP laser of FIG. 3 after being modified by the optical filter of FIG. 3.
FIG. 5 is a graphical illustration showing a light source integrated in a single module.

### DETAILED DESCRIPTION OF THE PREFERRED EMBODIMENT

While described below using a FP laser, the invention is applicable to other laser light sources that develop multiple wavelength outputs. Furthermore, while described as being fabricated on a silicon substrate and integrated on a ceramic module, the invention is applicable to other substrate and module materials.

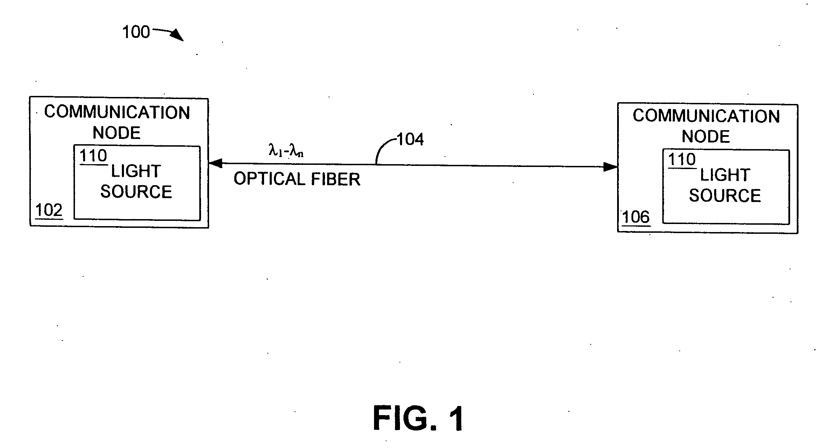

FIG. 1 is a block diagram illustrating an exemplar communication system 100 in which the invention resides. The communication system 100 includes a first communication node 102 coupled to a second communication node 106 via an optical fiber 104. Although shown as connected using a single optical fiber 104, the communication node 102 can be coupled to the communication node 106 using a plurality of optical fibers.

Each communication node 102 or 106 is illustratively an optical communication node and includes components that allow optical signals to be communicated between the nodes 102 and 106. The communication nodes 102 and 106 each include one or more light sources, an exemplar one of which is illustrated using reference numeral 110, constructed in accordance with embodiments of the invention. The light source 110, as will be described below, includes a laser device that is capable of providing light output at multiple wavelengths, and includes related components that modulate and direct the light at multiple wavelengths onto optical fiber 104. In a WDM communication environment, the optical fiber may transport many tens or hundreds of optical signals at different wavelengths using one or more laser sources having appropriately spaced outputs, but for simplicity, will be described as transporting light at four (4) different wavelengths λ₁ through λ₄.

Further, it should be understood that the transmission that occurs between the communication node 102 and the communication node 106 can be bi-directional so that each communication node 102 and 106 includes both transmitting and receiving components.

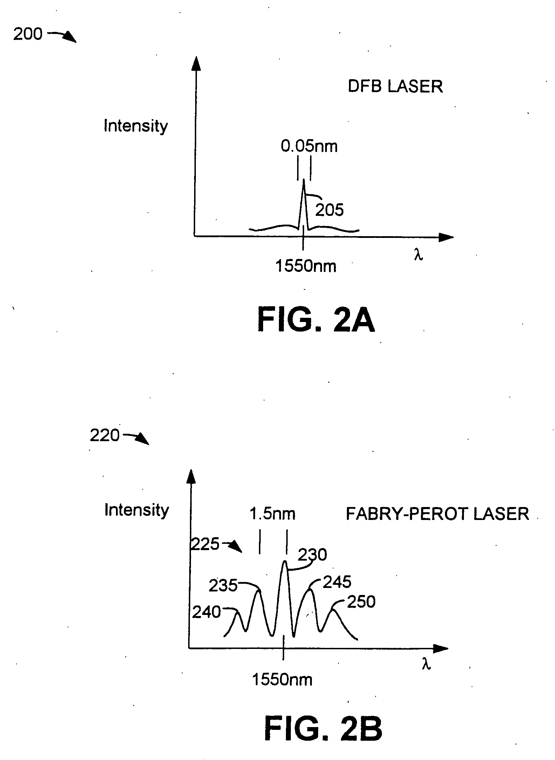

FIG. 2A is a graphical illustration 200 showing the output spectrum of a distributed feedback (DFB) laser. The vertical axis represents relative light intensity, while the horizontal axis represents wavelength, or frequency. As shown, an exemplar output peak 205 is located at approximately 1550 nanometers (nm), with a very narrow spectrum.

FIG. 2B is a graphical illustration showing an output spectrum of a FP laser. On the graph 220, the vertical axis represents relative light intensity, while the horizontal axis represents wavelength, or frequency. The exemplar output of a FP laser is shown using output trace 225, which includes a center peak 230 having a wavelength of approximately 1550 nm. The output trace 225 includes a series of output peaks, with adjacent peaks being separated in wavelength by approximately 1.5 nm. The output trace 225 includes peaks 230, 235, 240, 245 and 250. When a conventional FP laser is used in a conventional optical network, the output spectrum (output trace 225) is not resolved and the output is used as a single wavelength having a large spectral width. Because of this large spectral width, FP lasers have been used only in short distance, low data rate optical communication networks.

This multiple peak output of a FP laser makes the invention useful in a CWDM or a DWDM optical communication system. As will be described below, each output peak can be spectrally isolated and separately modulated, thereby providing multiple modulated wavelengths from a single laser device. Furthermore, as will be described below, the single broadband laser device can be integrated with appropriate waveguide components and modulators to form a light source that is constructed as a single module.

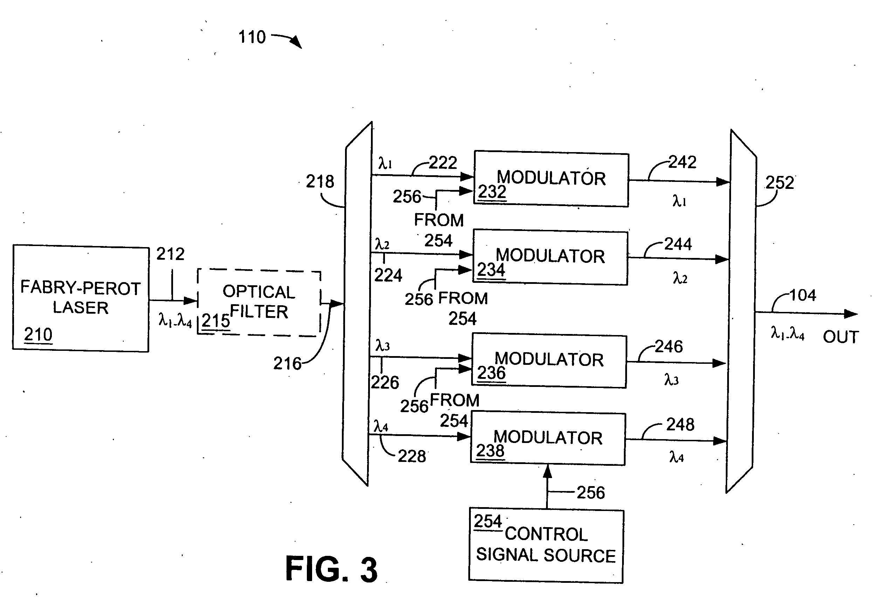

FIG. 3 is a block diagram illustrating the light source 110 of FIG. 1. The light source 110 includes a FP laser 210 that provides multiple output wavelengths onto connection 212. Connection 212 can be one or more optical waveguides, fibers, or other optical transport medium capable of communicating optical signals. Furthermore, although illustrated using only four wavelengths, the output of the FP laser 210 may comprise a greater or fewer number of outputs. Further, while the output of the FP laser shown in FIG. 2B includes five peaks, for simplicity the light source 110 in FIG. 3 includes four modulated wavelengths. Indeed, the number of modulated wavelengths is arbitrary.

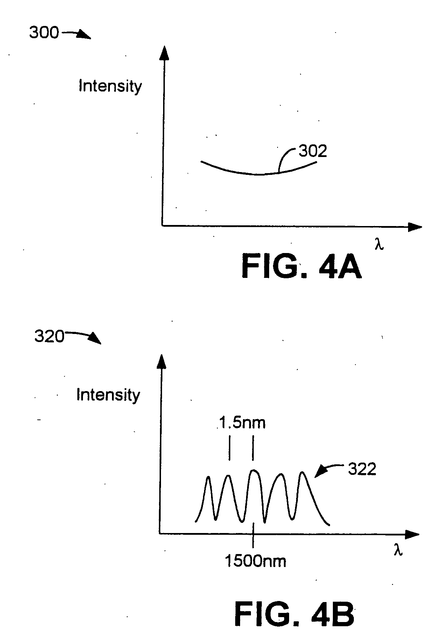

The output of the FP laser 210 is optionally supplied via connection 212 to an optional optical filter 215. When employed, the optical filter 215 may include a profile that is reciprocal to the output of the FP laser 210. Such an optical filter profile is illustrated in FIG. 4A. In FIG. 4A, the vertical axis represents relative light intensity while the horizontal axis represents wavelength, or frequency. As shown in FIG. 4A, the trace 302 represents the filter profile, and when considered with respect to the output of a FP laser as shown in FIG. 2B, evens the light intensity of the off-center frequencies and the on-center frequency.

To further explain, FIG. 4B illustrates the FP laser 210, the output of which has been acted upon by the optical filter 215. As shown in FIG. 4B, and to contrast with that shown in FIG. 2B, the output peaks of the FP laser 210 have been normalized to a particular light intensity. In this manner, the optical filter 215 modifies the intensity output of each of the wavelengths of the FP laser so that each wavelength exhibits similar light intensity output.

Referring again to FIG. 3, the output of the optical filter 215, if employed, is supplied via connection 216 to demultiplexer 218. If an optical filter is omitted, then the output of the FP laser 210 is coupled directly to the demultiplexer 218. The demultiplexer 218 can be, for example but not limited to, an array waveguide (AWG) or a grating based device. The demultiplexer 218 separates each optical wavelength from the output of the FP laser onto individual connections. For example, the first wavelength λ₁ is supplied onto connection 222, the second wavelength λ₂ is supplied onto connection 224, the third wavelength λ₃ is supplied to connection 226 and the fourth wavelength λ₄ is supplied onto connection 228. The connections 222, 224, 226 and 228 can be suitable optical waveguides or another optical transport medium.

Each of the wavelengths is then supplied to an individual modulator. The first wavelength λ₁ is supplied to modulator 232, the second wavelength λ₂ is supplied to modulator 234, the third wavelength λ₃ is supplied to modulator 236 and the fourth wavelength λ₄ is supplied to modulator 238.

The modulators 232, 234, 236 and 238 each receive an independent control signal from control signal source 254 via connection 256. Each modulator individually modulates each optical wavelength with communication information supplied from the control signal source 254.

The output of modulator 232 is a modulated optical signal at the first wavelength and is supplied on connection 242 to multiplexer 252. Similarly, the output of modulator 234 is the second wavelength modulated signal and is supplied on connection 244 to the multiplexer 252. In similar fashion, the output of modulator 236 is supplied onto connection 246 and the output of modulator 238 is supplied onto connection 248 for input to the multiplexer 252. The multiplexer 252 can be an array waveguide similar to the demultiplexer 218, or can be any device for combining optical signals. The output of the multiplexer 252 is then supplied onto optical fiber 104 for transmission to another communication node.

Although shown in FIG. 3 as including a demultiplexer 218 to spatially separate the output of the FP laser 210, the invention may be implemented by modulating the broadband output wavelengths of the FP laser 210 without spatially separating the wavelengths. This can be accomplished by, for example, using an acousto-optic modulator to modulate the plural spectral peaks of the FP laser 210. In such an embodiment, the acousto-optic modulator would replace the demultiplexer 218 and the demultiplexer 252 and simultaneously modulate all the spectral peaks of the output of the FP laser 210.

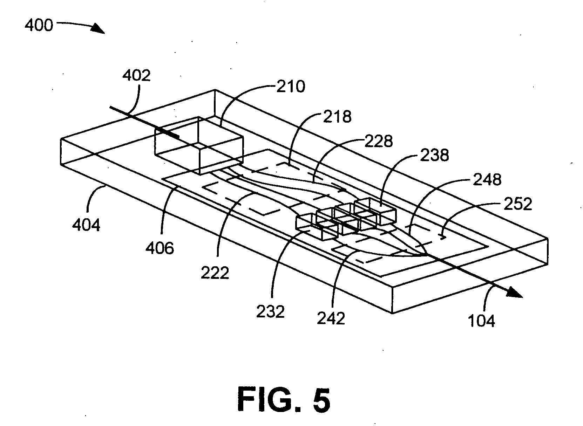

FIG. 5 is a graphical illustration showing a light source 400 integrated in a single module. The module 400 includes a ceramic module 404 over which a silica waveguide combiner 406 is constructed. The silica waveguide combiner 406 may include the demultiplexer 218 and the multiplexer 252 of FIG. 3. The FP laser 210 receives an electrical input stimulus over connection 402 and can also be integrated onto the ceramic module 404 as shown so that the light output of the FP laser 210 is coupled to the silica waveguide combiner 406. The silica waveguide combiner 406, and more specifically, the demultiplexer 218 fabricated thereon, include the individual connections 222, 224, 226 and 228 that couple the output of the FP laser 210 to respective modulators 232, 234, 236 and 238. The output of each modulator is then supplied to a respective connection 242, 244, 246 and 248 over which the outputs are combined onto the optical fiber 104.

As shown in FIG. 5, the laser 210, the demultiplexer 218, the modulators 232, 234, 236 and 238, and the multiplexer 252 can all be integrated onto the ceramic module 404, thus creating a compact modular light source that is capable of providing multiple wavelength output modulated light signals from the single FP laser.

It will be apparent to those skilled in the art that many modifications and variations may be made to the preferred embodiments of the present invention, as set forth above, without departing substantially from the principles of the present invention. For example, many WDM communication systems can benefit from a multiple output, compact light source. Furthermore, other laser devices having multiple wavelength outputs can be used in the invention. Further still, while illustrated using a single light source, the invention is applicable in situations where the output of two or more light sources can be combined in alternative embodiments. All such modifications and variations are intended to be included herein within the scope of the present invention, as defined in the claims that follow.

## Claims

1. A multiple wavelength output light source (110), comprising:
a laser device (210) having a plurality of output wavelengths (λ₁-λ₄);
a demultiplexer (218) for separating the plurality of output wavelengths (212); and
a plurality of modulators (232, 234, 236, 238) associated with and configured to modulate each wavelength (λ₁-λ₄).

2. The light source (110) of claim 1, wherein the laser device (210), the plurality of modulators (232, 234, 236, 238) and the demultiplexer (218) are fabricated on one substrate and comprise one module (404).

3. The light source (110) of one of the preceding claims, wherein the plurality of output wavelengths (λ₁-λ₄) represents the output spectrum (220) of the laser device (210).

4. The light source (110) of one of the preceding claims, further comprising an optical filter (215) configured to receive the plurality of output wavelengths (λ₁-λ₄) and modify each wavelength to a predetermined profile.

5. The light source (110) of one of the preceding claims, wherein the laser device (210) is a Fabry-Perot laser.

6. The light source (110) of one of the preceding claims, further comprising a combining device (252) configured to combine each of the plurality of modulated wavelengths (λ₁-λ₄) onto a single optical fiber (104).

7. The light source (110) of one of the preceding claims, wherein the laser device (210) has a spectral distribution including distinct peaks (230, 235, 240, 245...), each of the output wavelengths (λ₁-λ₄) corresponding to a different one of the peaks.

8. A method for forming a broad spectrum modulated laser output, the method comprising:
providing a laser device (210) having a plurality of output wavelengths (λ₁-λ₄);
separating (218) the plurality of output wavelengths (λ₁-λ₄); and
modulating (232, 234, 236, 238) each of the plurality of output wavelengths (λ₁-λ₄).

9. The method of claim 8, further comprising forming the laser device (210) and performing the modulating step and the separating step on a single module (404).

10. The method of claim 8 or 9, further comprising combining (252) each of the plurality of modulated output wavelengths (λ₁-λ₄) onto a single optical fiber (104).
